# EUROPÄISCHE PATENTANMELDUNG

(11) **EP 2 017 627 A2**
(43) Veröffentlichungstag der Anmeldung: **21.01.2009**
(21) Anmeldenummer: 08160058.7
(22) Anmeldetag: 10.07.2008
(51) Int. Cl.: G01P 3/488

(54) **Induktive drehzahlerkennung**

(30) Priorität: 19.07.2007 DE 102007033745
(71) Anmelder: Cherry GmbH, 91275 Auerbach/Opf. (DE)
(72) Erfinder: Schunk, Matthias, 91235, Hartenstein (DE)
(74) Vertreter: Leske, Thomas

(57) **Zusammenfassung**

Anordnung zur induktiven Drehzahlerkennung, bei der zwei Planarspulen in einem gegebenen Abstand von einem sogenannten Impulsrad und in Drehrichtung des Impulsrads versetzt angeordnet sind, und jeweils Teil eines Oszillators sind, dessen Schwingfrequenz ausgewertet wird.

## Beschreibung

Die Erfindung bezieht sich auf eine Anordnung zur induktiven Drehzahlerkennung nach dem Oberbegriff des Patentanspruchs 1. Solche Anordnungen sind bspw. aus der Offenlegungsschrift DE 10 2005 029 764 A1 bekannt. Bei einer ersten Ausführungsform ist dort das Sensorelement als Hall-Sensorelement ausgebildet. Hall-Sensorelemente eignen sich gut zur Erfassung der Variation eines Magnetfelds und werden daher häufig zur Drehzahlerfassung verwendet. Hall-Sensorelemente sind kostengünstig zu erwerben und sind auch bei Temperaturen bis etwa 160°C einsetzbar.

Nachteilig an der Hall-Sensorik ist, dass sie empfindlich gegenüber Schmutzpartikeln ist. Im schlimmsten Fall kann die Verschmutzung zu einem kompletten Ausfall der Sensorik führen.

Gemäß der DE 10 2005 029 764 A1 kann alternativ das Sensorelement als magnetoresistives (MR) Sensorelement ausgebildet sein. Bei einer weiteren alternativen Ausgestaltung ist das Sensorelement induktiv ausgebildet. Auch induktive Sensorelemente eignen sich prinzipiell gut zur Erfassung der Variation eines Magnetfeldes.

Bei den bekannten induktiven Drehzahlerkennungen werden gewickelte Spulen verwendet, die neben einem hohen Materialaufwand als entscheidenden Nachteil mit sich bringen, dass sie im Durchschnitt eine Tiefe von mehreren Zentimetern besitzen.

Die nachfolgende Tabelle nennt einige Druckschriften, die beispielhaft für die bisher verwendete Hall-Sensorik und induktive Sensorik stehen:

| Anmelde n ummer | Titel | Inhaber | Bild | Status | Patt. am |
|---|---|---|---|---|---|
| DE4341405 | Anordnung zur Erfassung der Position rotierender Weiten | AB Elektronik GmbH | 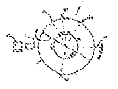 | erloschen | DE GeschM erloschen |
| DE4445378 | Verfahren und Vornchutng zur Erfassung der Winkelposition einer rotierenden Welle | AB Elektronik GmbH | 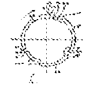 | erloschen | EP: JP: US. WO |
| DE10114858 | Kurbelwellensensor-IC | AB Elektronik GmbH | 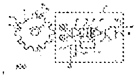 | erloschen | DE GeschM eingetragen a. anhangig |
| DE2847522 | Induktiver Geber und Auswerteschaltung hierzu | Robert Bosch Gmbh | 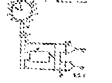 | erloschen | JP; FR |
| | Induktiver Drehzahl- oder Drehwinkeigeber | Robert Bosch GmbH | 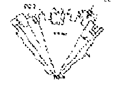 | erloschen | GB; FR; IT |
| DE3242109 | Vorrichtung zur Erfassung der Drahzahl eines rotierenden Teils | Robert Bosch GmbH | 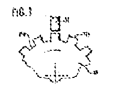 | DE erloschen | EP:JP: US müssten alle erloschen sein |
| | | | | | |
| DE4431649 | Sensoranordnung zur Bestimmung der Drehzahl eines sich bewegenden Bauteils | Robert Bosch GmbH | 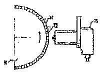 | erloschen | ---------- |
| | | | | | |

Aus dem Prospekt "Digital Inductive Position, Speed and Direktion Sensor PO120", Seite 1 bis 3, ist ein digitaler induktiver Sensor zur linearen Positionsbestimmung, zur Winkelmessung und zur Drehzahlmessung mit zahnförmigen Impulsrädern bekannt. Die Messspulen sind flach und widerstandsfähig in Öl, Wasser, Staub und in magnetischen Feldern. Der Sensorchip umfasst - nach dem Transformatorprinzip - eine Sendespule und zwei Empfangsspulen. Die Empfangsspulen sind in Bewegungsrichtung des Impulsrads (des Targets) versetzt. Der mögliche Abstand zwischen Target und Sensorchip ist auch bei dieser Anordnung begrenzt.

Die Aufgabe der Erfindung besteht darin, die Probleme des Stands der Technik zu überwinden, d. h. eine Anordnung zur induktiven Drehzahlerfassung anzugeben, die unempfindlich ist gegenüber Verschmutzung durch Partikel, die eine geringe Einbautiefe ermöglicht und die einen großen Abstand des Gebers erlaubt.

Der Drehzahlgeber soll auch hohe Temperaturen und hohe Drücke wie z.B. in einem Getriebe aushalten.

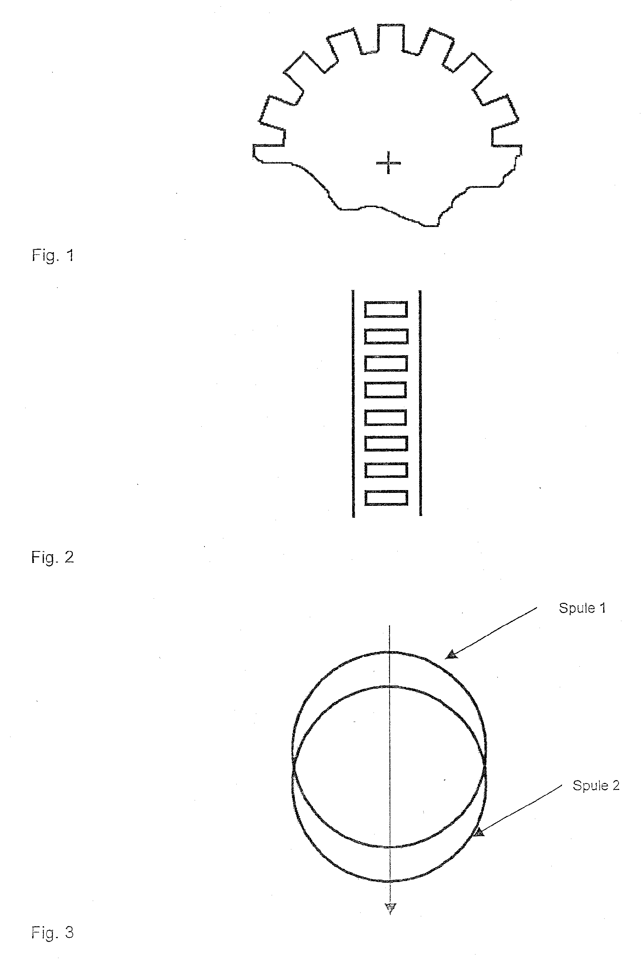

Die grundsätzliche Lösung besteht gemäß Anspruch 1 in der Nutzung zweier Planarspulen zur Drehzahlmessung. Die beiden Spulen werden so angeordnet, dass sie in Drehrichtung räumlich versetzt sind. Die Detektion mittels der Spulen erfolgt über ein bewegtes Bauteil, ein so genanntes Impulsrad. Grundvoraussetzung für dieses Impulsrad ist, dass es den induktiven Sensor periodisch beeinflussen kann. Der Aufbau des Impulsrades kann entweder dem eines Zahnrads ähneln (siehe Figur 1) oder es kann wie ein Gitter aufgebaut sein (siehe die schematische Darstellung in Figur 2). Das Impulsrad muss nicht codiert sein, um erkennen zu können, in welche Richtung es sich dreht. Ausschlaggebend hierfür ist, dass die beiden Planarspulen in Drehrichtung räumlich versetzt angeordnet sind. Die Figur 3 zeigt diesen räumlichen Versatz der beiden Flachspulen. Die Spule 1 kann Teil eines Oszillators sein und die Spule 2 kann ebenfalls Teil eines weiteren Oszillators sein, bei denen jeweils die Oszillatorfrequenzen bestimmt werden. Eine Frequenzauswertung ist, aufgrund einer höheren Auflösung, genauer als eine konventionelle Spannungs- oder Stromauswertung.

Falls es in einem Spezialfall auf eine Drehrichtungserkennung nicht ankommt, kann auch eine einzige Planarspule zur Drehzahlbestimmung genügen, wie es im nebengeordneten Anspruch 12 angegeben ist. Auch dann gelten alle Vorteile, die aus der Schwingfrequenzauswertung des zugehörigen Oszillators kommen.

Durch die spezielle Anordnung der Spulen 1 und 2 in Figur 3 (oder entsprechend einer einzigen Planarspule) erhält man jeweils eine große wirksame Spulenfläche. Dies ist wichtig, um auch noch bei einem großen Abstand zum Impulsrad genaue Auswertungen vornehmen zu können.

Die Spule 1 (und gegebenenfalls die Spule 2) werden bevorzugt auf einer Leiterplatte aufgedruckt, können aber auch gestanzt sein oder aus gebogenem Draht etc. bestehen.

Um eine gegenseitige Beeinflussung der beiden Spulen 1 und 2 zu vermeiden, werden diese durch einen Multiplexer so geschaltet, dass immer nur eine Spule von Strom durchflossen ist und die andere Spule während dieser Zeit hochohmig ist. Die Auswertung von Frequenzänderungen trägt bei dem erfindungsgemäßen Drehzahlsensor dazu bei, eine Detektion auch in großen Abständen entscheidend zu unterstützen. Eine Detektion unter diesen Bedingungen stellt einen erheblichen Vorteil dar. Mit bekannten Anordnungen kann bisher nur ein Abstand zwischen Sensor und Impulsrad von maximal 4 bis 5 mm realisiert werden. Mit der erfindungsgemäßen Anordnung kann noch in einem Abstand von bis zu 10 mm gearbeitet werden.

Dank des großen Abstands kann innerhalb einer Anwendung auch der Impulsgeber (das Impulsrad) beliebig ausgetauscht werden. Im Stand der Technik entstand das Problem, dass beim Einsatz kleinerer Geberräder (Impulsräder) der Sensor aufgrund des weiteren Abstands keine brauchbaren Ergebnisse mehr lieferte. Die Kombination von planaren Spulen und der Frequenzauswertung wirkt diesem Nachteil entgegen.

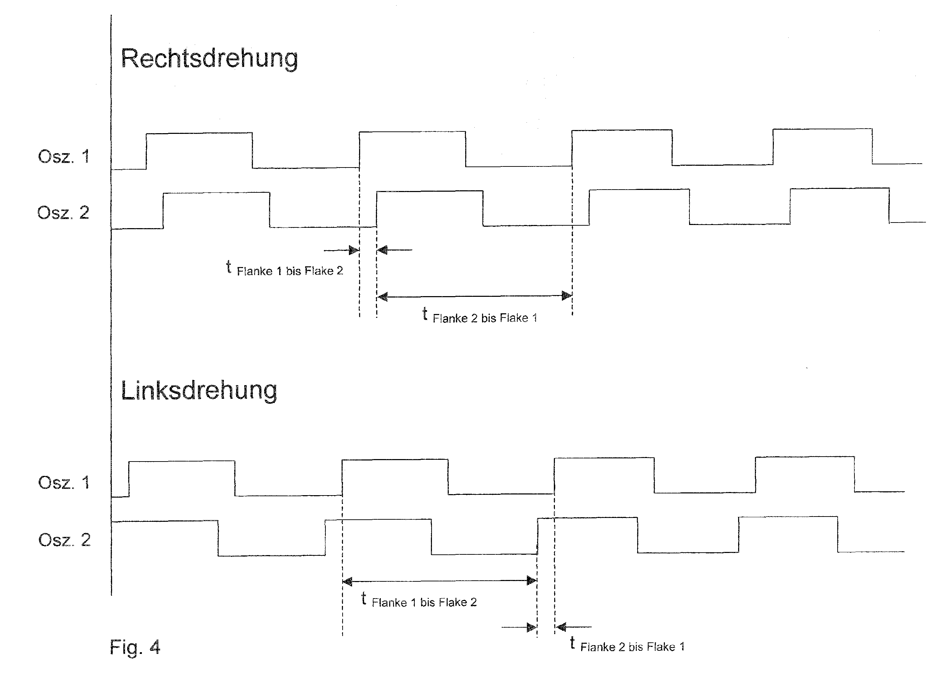

Eine Drehrichtungserkennung wird auf besonders einfache Art und Weise mitgeliefert, wenn das Vorrücken eines Zahns oder eines Gitterelements (jedenfalls das Vorbeigleiten eines impulsverursachenden Abschnitts des Radumfangs) zuerst an einer Flachspule und dann an der anderen Flachspule impulsartig wahrgenommen wird. In Fig. 4 ist zu erkennen, wie sich die Reihenfolge der Impulsflanken mit der Drehrichtung umkehrt.

Bei der zweiten Lösung gemäss den Ansprüchen 12 bis 21 wird diese Drehrichtungserkennung nicht ohne weiteres mitgeliefert, kann jedoch auf eine zur ersten Lösung alternative Weise ergänzt werden, nämlich wenn das Impulsrad im Sinne des Anspruchs 13 kodiert ist. Kodierung bedeutet, dass die einzelnen Zähne des Impulsrads unterscheidbar sind. Dann ist die Verwendung zur Drehrichtungserkennung gemäss Anspruch 22 möglich.

Die folgenden technischen Zusatzmerkmale gelten für beide Lösungen:
- Das Impulsrad muss kein magnetischer Betätiger sein, sondern kann ein elektrisch leitfähiges Wirbelstrom-Bedämpfungselement sein. Im kodierten Fall hat beispielsweise jeder Zahn bzw. jeder Zahnzwischenraum eine unterschiedliche Leitfähigkeit.
- Das sogenannte Impulsrad kann einem Zahnrad ähneln oder es kann an seinem Umfang wie ein periodisches Gitter aufgebaut sein.
- Ein großer Vorteil ist, dass das Impulsrad gegen ein anderes, nicht baugleiches Impulsrad ausgetauscht werden kann, weil die Abstandsabhängigkeit der Erkennungsanordnung verringert wurde. Die zulässigen Montagetoleranzen sind daher größer. Der Abstand zwischen Planarspule und Impulsrad kann bis zu 10 mm betragen.
- Die Planarspulen sind auf einer Leiterplatte aufgedruckt, gegebenenfalls in Multilayertechnik. Flachspulen lassen sich aber alternativ auch durch Ausstanzen aus Blech oder durch Drahtbiegen herstellen.
- Zur Drehzahlerkennung wird nicht die absolute Schwingfrequenz ausgewertet (die Grundfrequenzen liegen im MHz-Bereich, beispielsweise etwa 20 MHz oder etwa 400 MHz), sondern es werden die Frequenzänderungen beim Vorbeigleiten eines Impulszahns detektiert. Ein Zahlenbeispiel soll dies abschliessend erläutern.

Bei Raumtemperatur (20 Grad Celsius) betrage die Grundfrequenz 20,0 MHz. Der Impuls erhöht diese Schwingfrequenz vorübergehend auf 20,2 MHz; d.h. der Impuls bewirkt eine kurzzeitige Frequenzänderung um 0,2 MHz (die sehr gut detektierbar und einem Zahn zuzuordnen ist).

Das gleiche Experiment bei einer Getriebetemperatur von 150 Grad Celsius ergibt zwar eine erhöhte Grundfrequenz von 24,5 MHz, aber eine konstante Frequenzänderung von 0,2 MHz auf jetzt 24,7 MHz. Mit Hilfe der Erfindung lässt sich also jedem impulsauslösenden Element des Impulsrads eine konstante Frequenzänderung (d.h. eine temperaturstabile und abstandskompensierbare Frequenzänderung) zuordnen. Solche Impulse können in der Auswertelogik leicht und sicher gezählt werden.

Bei einer Kodierung des Impulsrads sind die Frequenzerhöhungsimpulse im selben Sinne konstant (also temperaturstabil und abstandskompensierbar); sie unterscheiden sich lediglich ausserdem noch stufenförmig von Zahn zu Zahn bzw. in ihrer zeitlichen Änderung. Die Auswerteschaltung kann dann zusätzlich noch jeden individuellen Zahn nacheinander lokalisieren, d.h. aus dieser Individualisierung die Drehrichtung und/oder die grobe Winkelposition erkennen.

## Patentansprüche

1. Anordnung zur induktiven Drehzahl- und Drehrichtungserkennung, bei der zwei Planarspulen (1, 2)
- in einem gegebenen Abstand von einem sogenannten Impulsrad und
- in Drehrichtung des Impulsrads versetzt angeordnet sind,
- und jeweils Teil eines Oszillators sind, dessen Schwingfrequenz ausgewertet wird.

2. Anordnung nach Anspruch 1, **dadurch gekennzeichnet, dass** das Impulsrad kein magnetischer Betätiger ist.

3. Anordnung nach Anspruch 1 oder 2, wobei das Impulsrad periodisch wie ein Gitter aufgebaut ist.

4. Anordnung nach Anspruch 1 oder 2, wobei das Impulsrad einem Zahnrad ähnelt.

5. Anordnung nach Anspruch 1 bis 4, **dadurch gekennzeichnet, dass** das Impulsrad austauschbar ist.

6. Anordnung nach Anspruch 1 bis 5, **gekennzeichnet durch** einen Abstand der Planarspulen (1, 2) vom Impulsrad von bis zu etwa 10 mm.

7. Anordnung nach Anspruch 1 bis 6, **dadurch gekennzeichnet, dass** die Planarspulen (1, 2) auf einer Leiterplatte aufgedruckt sind, gegebenenfalls in Multilayertechnik.

8. Anordnung nach Anspruch 1 bis 6, **dadurch gekennzeichnet, dass** die Planarspulen (1, 2) ausgestanzt oder aus Draht gebogen sind.

9. Anordnung nach Anspruch 1 bis 8, **dadurch gekennzeichnet, dass** die Schwingfrequenzen der Oszillatoren im Bereich einer Grundfrequenz von etwa 20 bis etwa 400 MHz liegen.

10. Anordnung nach Anspruch 1 bis 9, **dadurch gekennzeichnet, dass** die Planarspulen (1, 2) durch einen Multiplexer dem Oszillator zugeschaltet werden.

11. Anordnung zur induktiven Drehzahl- und Drehrichtungserkennung, bei der eine Planarspule (1)
- in einem gegebenen Abstand von einem sogenannten Impulsrad angeordnet ist, und
- das Impulsrad kodiert ist, und
- die Planarspule (1) Teil eines Oszillators ist, dessen Schwingfrequenz ausgewertet wird.

12. Anordnung nach Anspruch 11, **dadurch gekennzeichnet, dass** das Impulsrad kein magnetischer Betätiger ist, sondern elektrisch leitfähig ist.

13. Anordnung nach Anspruch 11 bis 12, wobei das Impulsrad periodisch wie ein Gitter aufgebaut ist.

14. Anordnung nach Anspruch 11 bis 12, wobei das Impulsrad einem Zahnrad ähnelt.

15. Anordnung nach Anspruch 11 bis 14, **dadurch gekennzeichnet, dass** das Impulsrad austauschbar ist.

16. Anordnung nach Anspruch 11 bis 15, **gekennzeichnet durch** einen Abstand der Planarspule (1) vom Impulsrad von bis zu etwa 10 mm.

17. Anordnung nach Anspruch 11 bis 16, **dadurch gekennzeichnet, dass** die Planarspule (1) auf einer Leiterplatte aufgedruckt ist.

18. Anordnung nach Anspruch 11 bis 16, **dadurch gekennzeichnet, dass** die Planarspule (1) ausgestanzt oder aus Draht gebogen ist.

19. Anordnung nach Anspruch 11 bis 18, **dadurch gekennzeichnet, dass** die Schwingfrequenz des Oszillators im Bereich einer Grundfrequenz von etwa 20 bis etwa 400 MHz liegt.
